**Europäisches Patentamt**

**European Patent Office**

**Office européen des brevets**

(11) Veröffentlichungsnummer: **0 054 831**
A.1

# EUROPÄISCHE PATENTANMELDUNG

(21) Anmeldenummer: **81110236.7**

(22) Anmeldetag: **08.12.81**

(51) Int. Cl.³: **G 01 K 3/04**

(30) Priorität: **22.12.80 DE 3048426**
**22.12.80 DE 3048425**

(43) Veröffentlichungstag der Anmeldung: **30.06.82**
**Patentblatt 82/26**

(84) Benannte Vertragsstaaten: **AT BE CH DE FR GB IT LI NL SE**

(71) Anmelder: **OLYMPIA WERKE AG,**
**Postfach 960 Olympiastrasse, D-2940 Wilhelmshaven (DE)**

(72) Erfinder: **Loock, Ehrenfried, Allerstrasse 1,**
**D-2940 Wilhelmshaven (DE)**

(54) **Anordnung zum Erfassen des Verwendungszustandes eines Gebrauchsgutes.**

㊲ Bei verderblichen Gebrauchsgütern ist es erforderlich, daß der Zeitpunkt des Eintretens des Nichtmehrgebrauchszustandes äußerlich an den Gebrauchsgütern und/oder an deren Verpackungen kontrollierbar angeordnet ist. Die Erfindung ermöglicht eine derartige Kontrolle durch ein integrierendes Zeit-/Temperatur-Meßsystem unter Verwendung eines aus einem organischen oder anorganischen Feststoff gefertigten Kennzeichens (30). Die physikalische oder chemische Veränderung des Kennzeichens (30) kann optisch durch eine Farbänderung oder auch durch Messung der veränderbaren elektrischen Leitfähigkeit einfach festgestellt werden. Der Nichtmehrgebrauchszustand des Gebrauchsgutes ist einfach kontrollierbar.

OLYMPIA WERKE AG

E81/Ac/ra/PF1817/1821
28. November 1981

Anordnung zum Erfassen des Verwendungszustandes eines Gebrauchsgutes

Die Erfindung betrifft eine Anordnung zum Erfassen des Verwendungszustandes eines Gebrauchsgutes zum Zeitpunkt seiner
Verwendung insbesondere zum Abfragen des zwischenzeitlich eingetretenen Nichtmehrgebrauchszustandes. Unter Gebrauchsgütern
sind zunächst alle Waren des täglichen Bedarfs zu verstehen
die innerhalb einer bestimmten Zeit aufgebraucht sein müssen,
da sie als Folge von Umwelteinflüssen für den Verzehr, für
die Weiterverarbeitung, für die Weiterverwendung unbrauchbar
werden.

Unter Gebrauchsgütern sind im Zusammenhang mit der Erfindung
weiterhin auch beispielsweise Träger von Energien z. B. Wärmeenergiemengen zu verstehen, die in einer bestimmten Form bezogen werden können. Hierbei kann die Art des Trägers bzw.
dieser unverändert bleiben, während die Energie abgenommen
wird.

Aus dem täglichen Umgang mit diesen Gebrauchsgütern ist es
bekannt, eine Ware, die in Beuteln oder Tüten abgefüllte
Milch, der in der Umhüllung aufbewahrte Farbfilm oder das
Medikament mit einem Prägedatum zu versehen. Das aufgebrachte
Datum gibt entweder den Herstelltag oder den Abfülltag oder
den Tag, gegebenenfalls den Zeitraum an, bis zu dem bzw. innerhalb dessen das Gebrauchsgut verbraucht, verzehrt, belichtet
oder eingenommen werden kann.

Die unbedacht einer Wärmequelle ausgesetzte Milch, der im
Wagenablagefach vergessene Farbfilm sowie das sich infolge unsachgemäßer Lagerung verändernde Medikament bewirken jedoch, daß der Nichtmehrgebrauchszustand wesentlich früher eintritt als
es das für die Normalanwendung des Gebrauchsgutes bzw. für
die Normalbehandlung festgelegte Prägedatum aussagt.

Weiterhin sind Einrichtungen bekannt, die z. B. bei dem
Feststellen verbrauchter Energie an Heizkörpern verwendet
werden und wobei sich als Folge der Verdampfung einer
Flüssigkeit ein der verbrauchten Energiemenge zuzuordnender
Skalenwert ablesbar ist. Die Anzeige eines Energieverbrauchs
erfolgt nicht linear, da sich mit zunehmendem Hohlraum über
der Verdampferflüssigkeit ein vergrößerter Verdampferwiderstand aufbaut und so für die Verdampfung gleichen Volumens
mit zunehmender Dauer eine größere  Menge an Wärmeenergie
erforderlich ist.

Neben dem Gebiet der Gebrauchsgüter des täglichen Bedarfs
wendet sich die Erfindung auch solchen Gebrauchsgütern des
technischen Bedarfs zu. So werden beispielsweise in Tintenschreibwerken Tintenvorratsbehälter bzw. Tintennachfüllbehälter eingesetzt, die vom Zeitpunkt der Herstellung bis zum
Zeitpunkt ihres Einsetzens in das Tintenschreibwerk beim
Kunden unterschiedliche Temperaturgänge nachvollziehen. Die
Alterung der Tinte, erkennbar durch ein Zersetzen dieser
und die Alterung des die Tinte aufnehmenden kollabierbaren
Tintenbeutels, erkennbar durch Risse und Brüche insbesondere
in der Schweißnaht mit hierdurch bewirktem Tintenaustritt
wird gefördert durch beispielsweise krasse Temperaturanstiege
während des Transports.

Darüber hinaus ist es bekannt, bestimmte chemische und
physikalische Werte eines Stoffes, beispielsweise einer
Flüssigkeit durch Vergleichen mit festgelegten Werten festzustellen.

Generell kann festgestellt werden, daß die Einhaltung bestimmter Bedingungen, beispielsweise bestimmter und vorgeschriebener Lager- und Transportbedingungen den Gebrauchsgütern nicht angesehen werden können.

Es ist Aufgabe der Erfindung, den Nichtmehrgebrauchszustand eines Gebrauchsgutes zu erkennen, um dieses der weiteren Verwendung entziehen zu können.

Innerhalb der gestellten Aufgabe ist vorgesehen den Nichtmehrgebrauchszustand abzufragen, um zu verhindern, daß das Gerät unter Verwendung des nicht einwandfreien Gebrauchsgutes in Betrieb gesetzt wird.

Die vorgenannte Aufgabe wird gelöst durch die Merkmale des Anspruchs 1. Die Merkmale der weiteren Ansprüche stellen bevorzugte Ausgestaltungen nach der Erfindung dar.

Mit den Merkmalen der Ansprüche wird in vorteilhafter Weise ein Alterungsmeßsystem gezeigt, das dem Temperaturgang der gelagerten Ware folgt. Der Gedanke der Erfindung ist vielfältig einsetzbar. Der Zustand der Ware ist beispielsweise direkt elektrisch, thermisch oder auch optoelektronisch überprüfbar, so daß ein mit einer Abfrageeinrichtung versehenes Gerät den Zustand der Ware erfassen und den möglichen Nichtmehrgebrauchszustand in einer Anzeige visuell darstellen kann. Der verwendete Formling kann aus Stoffen organischer und anorganischer Art bestehen. Diese sind bei genauem Preßdruck auf einen vorherbestimmbaren Zeit-/Temperatur-Gang dosierbar. Die Dosierung und der Preßvorgang kann in dem Gehäuse vorgenommen werden, das an dem Gebrauchsgut anzubringen ist. Es sind Formlinge für unterschiedliche Temperaturbereiche und Zeiträume herstellbar. Neben dem Feststellen des Nichtmehrgebrauchszustandes kann auch die Länge eines Zeitraumes ermittelt werden, in dem das Gebrauchsgut, beispielsweise ein Tintenvorratsbehälter bereits gelagert worden ist. Es sind sowohl der Temperaturgang als auch die Umwandlungstemperatur vorab einstellbar. Die Formlinge sind aus Feststoffen verschiedener Eigenschaften herstellbar. Neben dem Feststellen des Nichtmehrgebrauchszustandes kann auch die Länge eines Zeitraumes ermittelt werden, in dem das Gebrauchsgut, beispielsweise ein nichtbelichteter Farbfilm bereits gelagert worden ist. Es sind sowohl der Temperaturgang als auch die Umwandlungstemperatur einstellbar. Die Formlinge sind aus Feststoffen verschiedener Eigenschaften herstellbar. Die Formlinge können lageunabhängig verwendet werden.

Im folgenden soll die Erfindung anhand der gezeigten Ausführungsbeispiele näher beschrieben werden. Dabei zeigen:

Figur 1 eine erste Anordnung nach der Erfindung in einer Vergrößerung nach Ablauf eines Lagerzeitraumes,

Figur 2 einen Schnitt durch die Anordnung entsprechend dem Schnittverlauf II-II in Figur 1,

Figur 3 eine zweite Anordnung in einer Vergrößerung im Schnitt,

Figur 4 einen Ausschnitt einer Milchpackung in einer Verkleinerung mit einer Anordnung nach der Erfindung,

Figur 5 einen Ausschnitt einer Flasche in einer Verkleinerung mit einer Anordnung nach der Erfindung,

Figur 6 die Verpackung eines Farbfilms mit einer
        Anordnung nach der Erfindung,

Figur 7 die Verpackung eines Medikamentes mit einer
        Anordnung nach der Erfindung,

Figur 8 einen Ausschnitt eines Radiators in einer
        Verkleinerung mit einer Anordnung nach der
        Erfindung,

Figur 9 eine Eiswaffel in einer Verkleinerung mit
        einer Anordnung nach der Erfindung,

Figur 10 eine erste Anordnung nach der Erfindung in
         einer Vergrößerung vor dem Beginn eines
         Lagerzeitraumes,

Figur 11, einen Schnitt durch die Anordnung entsprechend
          dem Schnittverlauf II-II in Figur 10,

Figur 12, einen Tintenvorratsbehälter in einer Verkleinerung mit einer Anordnung nach der Erfindung und

Figur 13 einen Ausschnitt eines Radiators in einer
         Verkleinerung mit einer Anordnung nach der
         Erfindung.

Die Angabe eines Verfalldatums auf vielen Waren des täglichen
Gebrauchs ist unbefriedigend. Die Einhaltung vorgeschriebener
Lagerbedingungen kann dem Gebrauchsgut nicht angesehen werden.
Da alle Alterungsvorgänge wie z. B. Oxydation, Hydrolyse,
Diffusion, Verdampfung sowie mikrobielle Zersetzung stark temperaturabhängig sind, wird mit der Erfindung ein Alterungsmeßsystem geschaffen, das dem Temperaturgang des Gebrauchsgutes weitestgehend folgt.

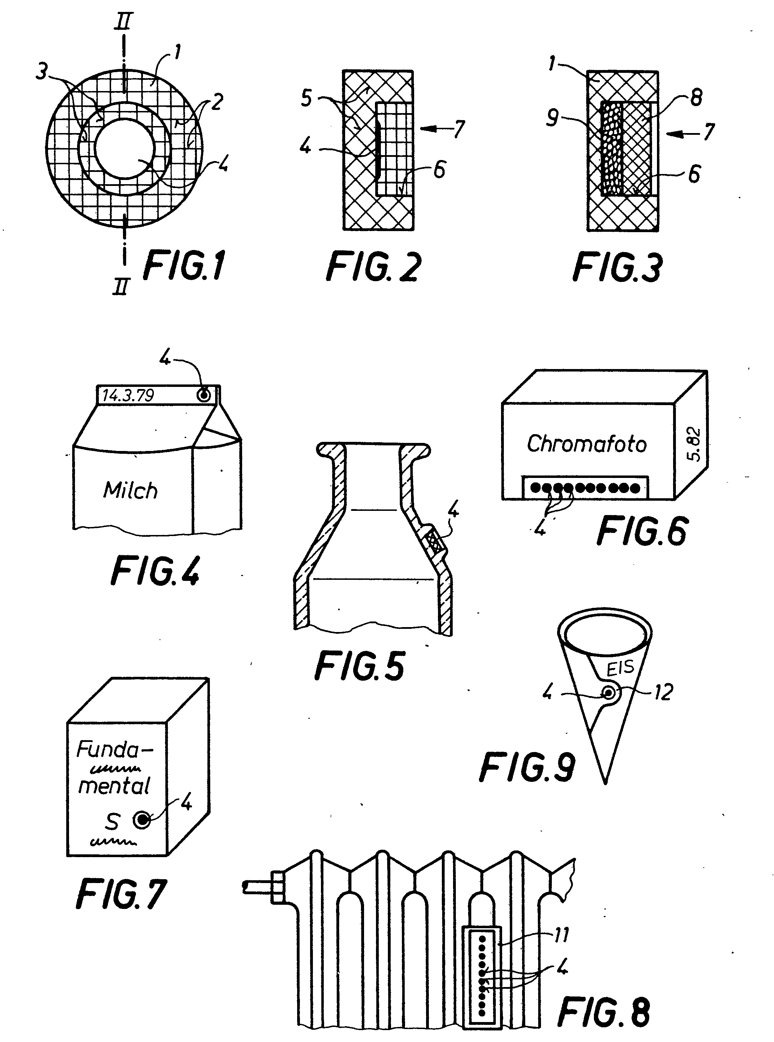

In Figur 1 ist ein Gehäuse 1 angedeutet worden aus beispielsweise einem roten Kunststoff. Die Farbe rot ist durch die
Kreuzschraffur 2 angedeutet worden. In das Gehäuse 1 ist eine
Absenkung eingelassen mit der Kreuzschraffur 3. In der Absenkung befindet sich ein Kennzeichen 4, das im Unterschied
zu dem roten Gehäuse und den roten Flächenteilen der Absenkung
hier eine weiße Farbe aufweisen kann. Dieser Kontrast ist gedacht für die Möglichkeit einer visuellen als auch einer detektorischen Abfrage.

In Figur 2 ist der Schnitt des Gehäuses aus Figur 1 gezeigt
nach dem dort angegebenen Schnittverlauf II-II. Das Gehäuse 1
ist aus Kunststoff gefertigt und deshalb hier mit einer
schrägen Kreuzschraffur 5 versehen worden. In dieser Darstellung ist die Absenkung 6 erkennbar, in der ein Rest
des Kennzeichens 4 noch vorhanden ist. Dieses weist hier
wie auch in Figur 1 bereits auf einen längeren Lagerungszeitraum hin.

Dieses in den Figuren 1 und 2 gezeigte Kennzeichen kann aus
einem verdampfbaren organischen oder auch aus einem anorganischen Feststoff bestehen. Als Beispiele seien hier 8-Oxychinolin,
Sorbinsäure, Paraformaldehyd und Ammoniumcarbonat sowie Benzoesäure genannt. Diese Stoffe sind durch mechanische Formgebung
direkt in das Gehäuse einbringbar. Oftmals kann der Wunsch
nach einer Wiederverwendung der Verpackung, z. B. einer Flasche
bestehen. Hierfür ist es wünschenswert, das Gehäuse mit einem
Lose-Formling nachzufüllen oder den Formling in Klebestreifen
einzufügen, die dann auf der Verpackung anzubringen sind.

Formlinge aus den zuvor angegebenen Feststoffen stellen integrierende Zeit-/Temperatur-Meßsysteme dar. Bei Überschreiten
eines festgelegten, durch Wahl des Feststoffes, seiner Größe
und der Verdampfung über die Öffnung 7 der Absenkung geeichten
Temperatur-/Zeit-Produktes ist der Feststoff verdampft, so daß
der zum Feststoff 4 in Figur 1 zum Hintergrund 3 des Gehäuses
1 in Figur 1 sichtbar wird. Bei konstanter Verdampfungsfläche
ist das Temperatur-/Zeit-Produkt der Feststoffmenge proportional.
Aufgrund dessen können, wie es später noch zu den Figuren 6 und 8
zu beschreiben ist, beliebig viele Zwischenwerte abgelesen
werden. Ein wesentlichen Moment kann auch darin gesehen werden, daß durch Auswahl eines geeigneten Feststoffes, z. B.
eines Imidazol gleichzeitig auch das Überschreiten einer
Maximaltemperatur mit festgestellt werden kann. Hierbei
erfolgt ein Schmelzen des Feststoffes.

So zeigt Figur 3 ein Gehäuse 1 mit einer Absenkung 6 und
einer Öffnung 7. In die Absenkung 6 ist ein Kennzeichen 8
einer bei einer vorherbestimmbaren Temperatur schmelzbaren
Art eingebracht worden. Zwischen dem Kennzeichen 8 und dem
Boden der Senkung 6 ist ein Schaumstoff oder Vlies 9 eingebracht zum Aufsaugen des in flüssigen Zustand übergehenden
Kennzeichens nach dem Überschreiten der Schmelztemperatur.
Das Vlies 9 kann aus einem kontrastierenden Material gefertigt
oder entsprechend imprägniert sein. Darüber hinaus kann das
Vlies 9 in einer anderen Anordnung, so beispielsweise als
Ring im Boden oder im Gehäuse 1 eingebracht sein in Kontakt
mit dem Kennzeichen 4.

Über die Öffnung 7 läßt sich die Verdampfungszeit einstellen.
Darüber hinaus ist es möglich, die Volumen der Kennzeichen 4
abzustufen. Bei gleichem Querschnitt, also gleichbleibender
Verdunstungsfläche würde sich eine Abstufung in der Dicke
der Kennzeichen ergeben für eine Anwendung nach den Figuren
6 und 8.

Die Figuren 4 bis 9 zeigen Beispiele für die vielfältige Anwendung des Erfindungsgedankens. Neben den gezeigten Anwendungsgebieten wie die Verwendung bei Nahrungsmitteln, Medikamenten, fotografischen Filmen und an Heizungssystemen können weitere Anwendungen z. B. bei Dichtungsmassen und Reaktionsklebstoffen in Betracht kommen.

Die zuvor beschriebenen Kennzeichen werden mit dem Gehäuse 1 auf dem Gebrauchsgut oder dessen Verpackung oder als einzelne Pille in der Verpackung und hier jeweils an sichtbarer Stelle nicht lösbar angebracht.

Figur 4 zeigt eine Milchpackung mit der Kennzeichnung 4 im Bereich des Datumaufdruckes. Selbstverständlich sollte das Kennzeichen 4 in einem Bereich angeordnet sein, der beim Öffnen der Verpackung nicht von der Hausfrau von der Verpackung entfernt wird.

Figur 5 zeigt einen Teil einer Flasche, beispielsweise einer wieder verwendbaren Flasche mit einem dann auswechselbaren Kennzeichen 4. Hierfür weist die Flasche in einem zugänglichen Bereich einen Anguß 10 auf, in den das Kennzeichen einsetzbar ist. Weiterhin besteht die Möglichkeit der Anbringung des Kennzeichens im Korken oder im Kronenkorken mit dem Gedanken der Erneuerung des Kennzeichens bei Neuabfüllung der Flasche.

In Figur 6 ist die Verpackung eines Farbfilms dargestellt mit mehreren, hier zehn Kennzeichnungen 4. Diese Kennzeichnungen weisen unterschiedliche Volumen auf, entsprechend möglicher Gesamtaufbewahrungsdauer.

Diese maximale Aufbewahrungszeit ist hier somit in Unterzeiten gegliedert und es können Schlüsse über die abgelaufene Lagerzeit als auch über die Gegebenheiten der Lagerung gezogen werden.

Figur 7 zeigt einen Anwendungsfall anhand der Verpackung eines Medikamentes. Das Kennzeichen 4 ist auch hier an einer direkt ersichtlichen Stelle der Verpackung angebracht, aufgeklebt oder in diese eingelassen worden.

Der Anwendungsfall nach Figur 8 zeigt gleichfalls eine Mehrzahl von Einzelkennzeichen 4, die in einem Gehäuse 11 eingebracht und durch ein Fenster erkennbar sind. Ein wesentlicher Unterschied zu den bisher bekannten Wärmemengeabfrageeinrichtungen besteht in der Linearität der Anzeige.

Figur 9 zeigt einen Eisbecher, der im Bereich der zu erfassenden Lasche 12 die Kennzeichnung 4 trägt. Es versteht sich, daß hier wie auch in den vorangegangen Beispielen, die Kennzeichnung auf einen Temperaturgang einzustellen ist, der den Nichtmehrgebrauchszustand der Waren charakterisiert, der beispielsweise durch Zwischenauftauen entsteht. Ist das Kennzeichen als Folge schlechter Kühlung ohnehin nicht oder nur schwer zu erkennen, wird der Kunde von dem Verkauf Abstand nehmen.

Darüber hinaus bestehen die Möglichkeiten des Einsatzes von Kennzeichen nach der Erfindung in technischen Bereichen, wo die Veränderung des Kennzeichens durch Detektoren erfaßbar und elektrisch auswertbar ist. Außerdem ist die Erfindung nicht festgelegt auf kurzlebige oder langlebige Gebrauchsgüter. Die Erfindung ist beispielsweise auch einsetzbar bei Vor- und Halbprodukten.

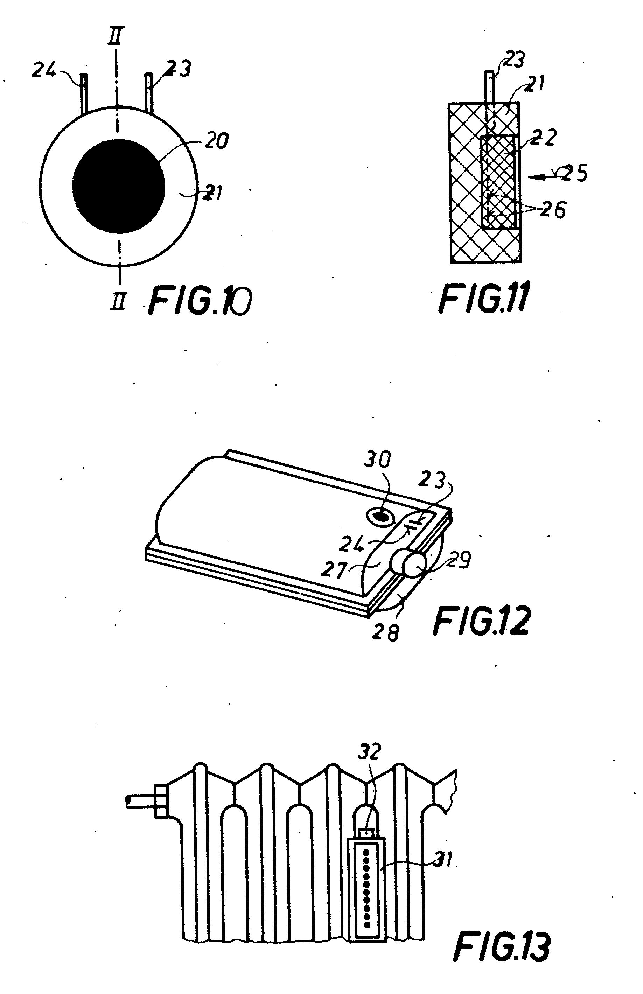

In Figur 10 ist ein Gehäuse 21 dargestellt worden, das mit einer Versenkung in seinem Zentrum versehen ist, in dessen Hohlraum ein Kennzeichen 20 eingebracht ist aus einem Werkstoff, dessen sich unter den Voraussetzungen der Lagerung, des Transportes usw. ändernde Eigenschaften in diesem Ausführungsbeispiel elektrisch abgefragt werden sollen. Das Kennzeichen ist ein Feststoff-Formling, der aus einem verdampfungsfähigen Material besteht, beispielsweise Sorbinsäure, dem Anteile von leitfähigen Substanzen wie Graphit, Aktivkohle oder auch Metallpulver zugesetzt wird. Das Mischungsverhältnis kann 85 % verdampfender Feststoff zu 15 % leitfähiger Substanz betragen. Als weitere Beipiele für den verdampfenden Feststoff sei hier 8-Oxychinolin, Paraformaldehyd und Ammoniumcarbonat sowie Benzoesäure genannt. Diese Stoffe sind mit den leitfähigen Substanzen mischbar und durch mechanische Formgebung direkt in das Gehäuse 21 einsetzbar. Hierbei ist zu gewährleisten, daß der Anfangswiderstand jedes Formlings reproduzierbar ist. Die Widerstandswerte sind derart auslegbar, daß für die Abfrage jede Änderung in Widerstandsverlauf zu Schaltmaßnahmen angesetzt werden kann.

Mit einer solchen Maßnahme ist ein Alterungsmeßsystem gegeben, das dem Temperaturgang möglichst weitgehend folgt. Da praktisch alle Alterungsvorgänge stark temperaturabhängig sind wie beispielsweise die Vorgänge Oxydation, Hydrolyse, Diffusion, Verdampfung und die mikrobielle Zersetzung, ist es ausreichend, daß das gezeigte integrierende Zeit-/Temperatur-Meßsystem dem Temperaturgang folgt. Mit zunehmender Verdampfung des Stützgerüstes nimmt der Kontaktdruck der leitfähigen Substanzen und damit die elektrische Gesamtleitfähigkeit des Kennzeichens 20 ab. Zur elektrischen Abfrage sind zwei Elektroden 23 und 24 angeordnet, die in das Gehäuse 21 eingelassen worden sind und in getrennten Bereichen mit dem Kennzeichen 20 in enger Kontaktberührung stehen, wie dieses dann aus der Figur 2 ersichtlich ist.

In Figur 11 ist das aus Figur 10 bekannte Gehäuse 21 im Schnitt dargestellt. In die Aussparung 25 ist das Kennzeichen 20 eingesetzt worden, das mit der Elektrode 23 und der nicht gezeigten Elektrode 24 bei 26 in Kontakt steht. Die Elektrode 23 ist in diesem Bereich in nicht sichtbarer Darstellungsweise gezeigt.

Oftmals kann der Wunsch nach einer Wiederverwendung der Verpackung bestehen. Hierfür ist es wünschenswert, das Gehäuse 21 mit einem Lose-Formling 20 nachzufüllen, der dann so in das Gehäuse 21 einzusetzen ist, daß dieser mit den Elektroden 23, 24 in gutem Kontakt steht. Beim Überschreiten eines durch die Wahl des verdampfbaren Feststoffes, seiner Größe und der Verdampfung über die Verdampfungsfläche, die hier dem kreisrunden Öffnungsquerschnitt entspricht, festgelegten Temperatur-/Zeitverlaufes, ist der Feststoff verdampft, bevor das Gebrauchsdatum abgelaufen ist. Bei konstanter Verdampfungsfläche ist das Temperatur-/Zeitprodukt der Feststoffmenge proportional. Aufgrund dessen können beliebig viele Zwischenwerte abgelesen werden, wenn das Volumen des Kennzeichens gestaffelt wird. Durch Wahl von Imidazol kann gleichzeitig das Überschreiten einer Maximaltemperatur mitfestgestellt werden. Hierbei erfolgt ein Schmelzen des Feststoffes, so daß sich auch der Widerstandswert im Sinne des Auflösens des Stützgerüstes verändert.

In Figur 12 ist ein Tintenbehälter dargestellt worden, der aus zwei Halbschalen 27 und 28 besteht und in dessen Hohlraum ein flexibler, kollabierbarer Tintenbeutel eingesetzt worden ist. Der Tintenbeutel ist mit einer Tinte gefüllt. Für den Anschluß des Tintenbehälters an das Tintenversorgungssystem eines Tintenschreibwerkes dient ein Pfropfen 29 aus einem beispielsweise Silikongummi, das von einer in den Tinte gefüllten Hohlraum des Tintenbeutels einzuführenden Kanüle durchstoßbar ist. In die Halbschale 27 ist ein Kennzeichen 30 der in Figur 10 und in Figur 11 gezeigten Art eingelassen worden. Die Elektroden 23 und 24 ragen aus dem Gehäuse heraus, so daß sie beim Einsetzen des Tintenbehälters in das Tintenschreibwerk mit einer Schaltungsmaßnahme zur Abfrage des Widerstandswertes des Kennzeichens in Kontakt bringbar sind.

0054831

Der Tintenbehälter und sein Inhalt können sowohl während
seiner Lagerung im vom Tintenschreibwerk gelösten Zustand, in
diesem als auch nach einer längeren Betriebsunterbrechung
in diesem einen Nichtmehrgebrauchszustand aufweisen, der
bei weiterem Gebrauch zu einer Schädigung des Tintenschreibwerkes bzw. des die Tinte auf einen Aufzeichnungsträger
übertragenden Tintenschreibkopf führen, die eine Entgasung
und Innenreinigung des Tintenschreibkopfes notwendig machen
würde.

In Figur 13 ist in verkleinerter und ausschnittsweiser Form
ein Radiator dargestellt worden, an dessen Vorderseite ein
Gehäuse 31 angebracht worden ist. Dieses Gehäuse 31 dient
zur Aufnahme einer Reihe von Kennzeichen der in den Figuren 10
und 11 beschriebenen Art, die in dem Gehäuse elektrisch, beispielsweise parallel zueinander geschaltet sein können. Der
sich als Folge des Temperatur-/Zeitganges verändernde Widerstandswert der parallel geschalteten Widerstandsstrecken der
Kennzeichen kann über den Steckkontakt 32 jederzeit mit einer
elektrischen Abfrageeinrichtung ermittelt werden.

OLYMPIA WERKE AG                E81/Ac/ra/PF1817/1821
                                28. November 1981

Patentansprüche:

1.    Anordnung zur Kontrolle des Zeitpunktes des Eintretens
      des Nichtmehrgebrauchszustandes eines Gebrauchsgutes
      mittels eines an dem Gebrauchsgut angeordneten Kennzeichens aus einem physikalisch oder chemisch veränder-
      baren Werkstoff g e k e n n z e i c h n e t   d u r c h
      ein integrierendes Zeit-/Temperatur-Meßsystem unter Verwendung eines aus einem organischen, gegebenenfalls aus
      einem anorganischen Feststoff gefertigten Kennzeichens (4).

2.    Anordnung nach Anspruch 1,   d a d u r c h   g e -
      k e n n z e i c h n e t ,   daß das Kenneichen (4) aus
      einem Feststoff mit farbändernden Bestandteilen besteht
      und an sichtbarer Stelle des Gebrauchsgutes und bei verpacktem Gebrauchsgut an der Verpackung angebracht ist.

3.    Anordnung nach Anspruch 2,   d a d u r c h   g e -
      k e n n z e i c h n e t ,   daß das Kennzeichen (4) aus
      einem verdampfbaren Feststoff besteht.

4.    Anordnung nach Anspruch 2,   d a d u r c h   g e -
      k e n n z e i c h n e t ,   daß das Kennzeichen (4) in
      Blickrichtung des Betrachters vor einem sich von der
      FArbe des Kennzeichens abhebenden Hintergrund (3) angebracht ist.

5.    Anordnung nach Anspruch 1, 2, 3 oder 4,   d a d u r c h
      g e k e n n z e i c h n e t ,   daß mehrere Kennzeichen
      (4) an dem Gebrauchsgut bzw. an der Verpackung angebracht
      sind, die ausgehend von einem kleineren Volumen bis zu
      einem größeren Volumen gestaffelt sind.

6. Anordnung nach Anspruch 5, d a d u r c h  g e -
k e n n z e i c h n e t ,  daß die Kennzeichen (4) bei
gleicher Verdampfungsfläche unterschiedlich dick sind.

7. Anordnung nach Anspruch 1, d a d u r c h  g e -
k e n n z e i c h n e t ,  daß als Kennzeichen (4) ein
Formling aus einem leicht schmelzbaren Feststoff verwendet wird.

8. Anordnung nach Anspruch 7, d a d u r c h  g e -
k e n n z e i c h n e t ,  daß das Kennzeichen (4) mit
einem saugfähigen Material (9) in Fließkontakt steht.

9. Anordnung nach Anspruch 2, d a d u r c h  g e -
k e n n z e i c h n e t ,  daß das Kennzeichen (4) in
ein Gehäuse (1) eingebracht ist, das mit einer Öffnung (7)
zur Atmosphäre und einer am Boden zur Farbe des Formlings
kontrastierenden Fläche (3) versehen ist.

10. Anordnung nach Anspruch 1, d a d u r c h  g e -
k e n n z e i c h n e t ,  daß dem Kennzeichen (20, 30)
eine elektrisch leitfähige Substanz zugesetzt worden ist.

11. Anordnung nach Anspruch 10, d a d u r c h  g e -
k e n n z e i c h n e t ,  daß das Kennzeichen (20, 30)
an einer Stelle des Gebrauchsgutes, gegebenenfalls an
dessen Verpackung angebracht ist, die von einer Abrageeinheit erfaßbar ist.

12. Anordnung nach Anspruch 10, d a d u r c h  g e -
k e n n z e i c h n e t ,  daß das Kennzeichen (20, 30)
zumindest einen verdampfbaren Feststoff aufweist, dem
eine leitfähige Substanz beigemischt ist.

13. Anordnung nach einem oder mehreren der zuvorgenannten Ansprüche, d a d u r c h   g e k e n n z e i c h n e t , daß das Kennzeichen (20, 30) in ein Gehäuse (21), gegebenenfalls in einen Verpackungsteil des Gebrauchsgutes eingebracht ist und daß aus dem Gehäuse (21) bzw. aus dem Verpackungsteil elektrisch leitende Kontakte (23, 24) herausgeführt sind, die mit getrennten Bereichen (26) des Kennzeichens (20, 30) in Berührung stehen.

14. Anordnung nach Anspruch 13, d a d u r c h   g e k e n n z e i c h n e t , daß die leitenden Kontakte (23, 24) in das Kennzeichen (20, 30) eingelassen sind.

15. Anordnung nach einem der vorhergehenden Ansprüche für einen an das Tintenversorgungssystem eines Tintenschreibwerkes anschließbaren Tintenbehälter, d a d u r c h   g e k e n n z e i c h n e t , daß der Tintenbehälter (27, 28) das Kennzeichen (30) an einer sichtbaren und/oder an einer durch eine Abfragevorrichtung in der Aufnahmevorrichtung des Tintenbehälters (27, 28) in der Maschine leicht erfaßbaren Stelle aufweist.

16. Anordnung nach Anspruch 15, d a d u r c h   g e k e n n z e i c h n e t , daß das eine elektrisch leitfähige Substanz enthaltene Kennzeichen (30) zwei aus dem Gehäuse des Tintenbehälters (27, 28) herausragbare elektrisch leitende Kontakte (23, 24) aufweist, die beim Einsetzen des Tintenbehälters (27, 28) in das Tintenschreibwerk mit einer Schaltungsmaßnahme zur Abfrage des Widerstandswertes des Kennzeichens in Kontakt bringbar sind.

0054831

FIG.1

FIG.2

FIG.3

FIG.4

Milch

14.3.79

FIG.5

Chromafoto

5.82

FIG.6

FIG.7

Funda-mental

S

EIS

FIG.9

FIG.8

Olympia Werke AG
PF 1817 E. Müller

0054831

**FIG.10**

**FIG.11**

**FIG.12**

**FIG.13**

Olympia Werke AG
PF 1821 E. Müller

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 2 271 552</u> (BIO-MEDICAL SCIENCES INC.)<br><br>* Einführung; Figuren 1,2,3,4,5; Seite 5, Zeile 34 - Seite 6, Zeile 22; Seite 7, Zeilen 12-33; Seite 8, Zeilen 6-28; Seite 9, Zeile 27 - Seite 10, Zeile 21; Seite 10, Zeile 34 - Seite 11, Zeile 9 *<br><br>-- | 1-3,7, 11 |
| X | <u>DE - A - 1 944 238</u> (MINNESOTA MINING AND MANUFACTURING CO.)<br><br>* Figuren 1,2; Seite 4, Absatz 4 - Seite 9; Absatz 2 *<br><br>-- | 1,2,7, 9,11 |
| A | <u>US - A - 1 535 536</u> (D.MACDONALD)<br><br>* Figuren 1,2,3,4,5,6,7; Seite 2, Zeilen 29-95 *<br><br>-- | 1,2,4, 7-9,11 |
| A | <u>US - A - 1 676 536</u> (K.A.FERKEL)<br><br>* Figuren 1,2,3,4; Seite 1, Zeilen 43-102 *<br><br>-- | 1-4,9, 11 |
| A | <u>US - A - 3 105 229</u> (J.STURM)<br><br>* Figuren 1,2,3,4,5,6; Spalte 2, Zeile 17 - Spalte 3, Zeile 48 *<br><br>---------- | 1,7,10 11,13, 14 |

### KLASSIFIKATION DER ANMELDUNG (Int. Cl.³)

G 01 K 3/04

### RECHERCHIERTE SACHGEBIETE (Int. Cl.³)

G 01 K 3/00
G 01 K 17/00
G 01 K 11/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| DEN HAAG | 02-04-1982 | VISSER |

EPA form 1503.1 06.78